# EUROPEAN PATENT SPECIFICATION

(11) **EP 2 422 454 B1**
(45) Date of publication and mention of the grant of the patent: **21.12.2016**
(21) Application number: 10766657.0
(22) Date of filing: 23.04.2010
(51) Int. Cl.: H04W 48/08

(54) **METHOD AND APPARATUS OF CARRIER ASSIGNMENT IN MULTI-CARRIER OFDM SYSTEMS**
VERFAHREN UND VORRICHTUNG ZUR TRÄGERZUORDNUNG IN MEHRTRÄGER-ODFM-SYSTEMEN
PROCÉDÉ ET APPAREIL D'ATTRIBUTION DE PORTEUSE DANS DES SYSTÈMES OFDM MULTI-PORTEUSES

(30) Priority: 24.04.2009 US 172344 P; 31.12.2009 US 291448 P; 23.04.2010 US 799360
(43) Date of publication of application: 29.02.2012
(73) Proprietor: MediaTek Inc., Science-based Industrial Park Hsin-chu City, Taiwan 300 (CN); Liao, Wan-Jiun, Taipei City, Taiwan 106 (CN)
(72) Inventor: LIAO, Wan-Jiun, Taipei City Taiwan 106 (CN); FU, I-Kang, Taipei City Taiwan 110 (CN); LU, Hsiao-Chen, Kaohsiung County Taiwan 840 (CN); TANG, Chih-Hsiang, Taipei City Taiwan 104 (CN); LIN, Sheng-Wei, Hsinchu City Taiwan 300 (CN)
(74) Representative: Habermann, Hruschka & Schnabel
(86) International application number: PCT/CN2010/072148
(87) International publication number: WO 2010/121567

(56) References cited:
- WO-A1-2006/107965
- WO-A1-2007/000095
- WO-A1-2007/116224
- WO-A2-2007/051193
- CN-A- 1 889 751
- CN-A- 101 237 602
- CN-A- 101 345 988
- KR-A- 20070 092 578
- KELVIN CHOU ET AL: "High Level Views on Multicarrier Operations for IEEE 802.16m ; C80216m-08_327r2", IEEE DRAFT; C80216M-08_327R2, IEEE-SA, PISCATAWAY, NJ USA, vol. 802.16m, no. r2, 5 May 2008 (2008-05-05), pages 1-8, XP068000853, [retrieved on 2008-05-12]

## Description

### CROSS REFERENCE TO RELATED APPLICATIONS

### TECHNICAL FIELD

The disclosed embodiments relate generally to wireless network communications, and, more particularly, to carrier assignment in OFDM multi-carrier systems.

### BACKGROUND

Multi-carrier OFDM systems have become the baseline system architecture in IEEE 802.16m (i.e. for WiMAX 2.0 system) and 3GPP Release 10 (i.e. for LTE-Advanced system) draft standards to fulfill next generation wireless system requirements. For example, multi-carrier OFDM technology can be used to achieve 1 Gbps peak transmission rate as required by ITU-R for IMT-Advanced systems such as the 4^{th} generation ("4G") mobile communication systems. Based on multi-carrier OFDM, various multiple access schemes such as OFDMA, OFDM/CDMA, and OFDM/TDMA have been developed and utilized in multi-carrier OFDM wireless systems. Network deployment, however, normally takes an evolution path, rather than a revolution one. For example, during the first stage of a 4G network upgrade (also referred to as the "4G Hotspot Deployment"), 4G air interface is selectively deployed in a few hotspots such as urban areas, bus stops, etc., while the remaining areas can only be served by 3G air interface. During the second stage of the 4G network upgrade (also referred to as the "4G Overlay Deployment"), all areas can be served by both 3G and 4G air interface. During the third stage of the 4G network upgrade (also referred to as the "4G Greenfield Deployment"), all areas can only be served by 4G air interface. It is thus necessary to ensure that a multi-carrier OFDM system can work well under different network deployment stages.

To support multi-carrier data transmission, one or more secondary carriers need to be assigned and activated between a base station and a mobile station. The base station thus needs to know the multi-carrier capability supported by the mobile station. Because of different hardware implementations on RF transceiver architecture, however, it is difficult for the base station to know which carriers and carrier aggregation combinations can be supported by the mobile station for multi-carrier data transmission. In some IEEE 802.16m contributions, an AAI_MC-REQ message (multi-carrier request message) is defined for a mobile station to inform its multi-carrier capability information to a serving base station. For example, the AAI_MC-REQ message may include the maximum processing bandwidth (i.e., 20MHz) and the maximum number of simultaneous RF carriers (i.e., 4) of a mobile station. Knowing such information, however, the serving base station still would not know exactly which combinations the MS could simultaneously process with an aggregated 20MHz bandwidth (i.e., 10+10, 5+10+5, and 5+5+5+5 etc.). It thus remains a challenge to communicate multi-carrier capability information between base stations and mobile stations such that multi-carrier data transmission can be effectively supported in a multi-carrier OFDM system.

From WO 2006/107965 A1 a method and apparatus for managing multi-carrier communications in cellular communication systems are known.

KELVIN CHOU ET AL, "High Level Views on Multicarrier Operations for IEEE 802.16m ; C80216m-08_327r2", IEEE DRAFT; C80216M-08_327R2, IEEE-SA, PISCATAWAY, NJ USA, (20080505), vol. 802.16m, no. r2, PAGE 1 - 8, XP068000853, proposes system state and working flow for a 802.16m system with support of multiple RF carriers.

### SUMMARY

The present invention is defined by the subject matter of the appended claims.

When a mobile station (MS) initializes to access a multi-carrier OFDM network, a two-stage network entry procedure is performed. During a first common network entry procedure, the MS selects one of its supported RF carriers as the primary carrier to perform network entry with a serving base station (BS). In a second stage of extended network entry procedure, the MS performs carrier assignment and carrier activation procedures with the serving BS, and is then ready for aggregated data transmission over multiple RF carriers. In one novel aspect, the MS and its serving BS exchange and negotiate carrier deployment and multi-carrier capability information, and make a well-informed carrier assignment decision based on the negotiation result. The carrier assignment procedure ensures that the assigned secondary carriers are not only supported by both the serving BS and the MS, but are also desirable under additional requirements and considerations.

During the carrier assignment procedure, the BS first informs the MS its carrier deployment information. Carrier deployment information comprises physical information of a set of available RF carriers supported by the BS. Based on the carrier deployment information, the MS informs the BS its multi-carrier capability information. Multi-carrier capability information comprises the RF carriers that can be simultaneously supported by the MS. Next, the BS assigns a set of secondary carriers to the MS for multi-carrier data transmission. The assigned secondary carriers are determined by the BS based on the multi-carrier capability information of the MS, as well as additional consideration such as channel quality measurement results and network traffic loading condition. Finally, the MS replies to confirm the assigned secondary carriers, or requests the BS to re-assign an updated set of secondary carriers. The updated assignment decision may be made by the BS in unsolicited manner, or based on the carrier re-assignment request from the MS.

Other embodiments and advantages are described in the detailed description below. This summary does not purport to define the invention.

### BRIEF DESCRIPTION OF DRAWINGS

The accompanying drawings, where like numerals indicate like components, illustrate embodiments of the invention.
Figure 1 illustrates a general initialization operation flow of a mobile station in a multi-carrier OFDM network in accordance with one novel aspect.
Figure 2 illustrates an operation flow of a carrier assignment procedure between a base station and a mobile station in a multi-carrier OFDM network.
Figure 3 illustrates one embodiment of a multi-carrier advertisement (MC-ADV) message broadcasted by a serving base station to inform its carrier deployment information.
Figure 4 illustrates one embodiment of a global carrier configuration (GLOBAL-CONFIG) message transmitted by a serving base station to a mobile station right after network entry completes.
Figure 5 illustrates different scenarios of carrier aggregation of a mobile station supporting an aggregated bandwidth of 20MHz.
Figure 6A illustrates a first hardware implementation of an RF transceiver to support multi-carrier capability of a mobile station.
Figure 6B illustrates a second hardware implementation of an RF transceiver to support multi-carrier capability of a mobile station.
Figure 7 illustrates one embodiment of a multi-carrier request (MC-REQ) message sent by a mobile station to inform its multi-carrier capability information.
Figure 8 illustrates one embodiment of a multi-carrier response (MC-RSP) message sent by a base station to assign secondary carriers.
Figure 9 illustrates mathematical notifications defining solution spaces of information exchanged in a carrier assignment procedure.
Figure 10 illustrates specific examples of a carrier assignment procedure between a base station and a mobile station.

### DETAILED DESCRIPTION

Reference will now be made in detail to some embodiments of the invention, examples of which are illustrated in the accompanying drawings.

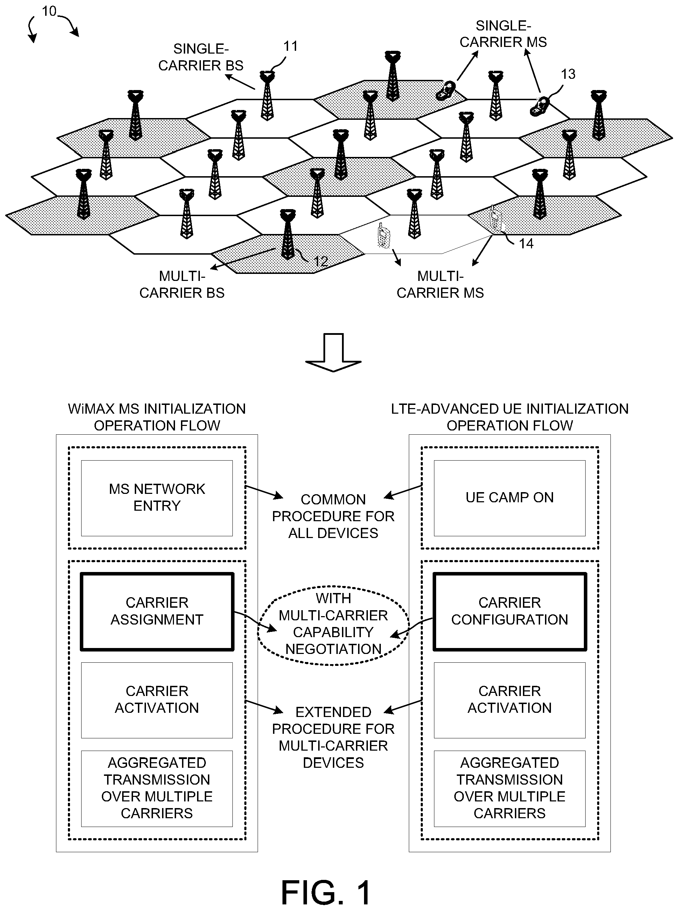

Figure 1 illustrates a general initialization operation flow of a mobile station in a wireless multi-carrier OFDM network 10 in accordance with one novel aspect. Wireless OFDM network 10 comprises a mixed single-carrier and multi-carrier base stations and mobile stations, for example, a single-carrier base station BS11, a multi-carrier base station BS12, a single-carrier mobile station MS 13, and a multi-carrier mobile station MS 14. When a mobile station starts to initialize and access the wireless network, it performs a two-stage network entry procedure. The two-stage network entry procedure can be used between either a single-carrier or a multi-carrier base station, and either a single-carrier or a multi-carrier mobile stations.

The two-stage network entry procedure for both WiMAX system and LTE-Advanced system is illustrated in Figure 1. For WiMAX system, in a first stage of common network entry procedure for all devices, a mobile station (MS) selects one of its supported RF carriers as the primary carrier to perform network entry with a serving base station (BS). In a second stage of extended network entry procedure for multi-carrier devices, the mobile station performs carrier assignment and carrier activation procedures with the serving base station, and is then ready for aggregated data transmission over multiple RF carriers. For additional details on the two-stage network entry procedure, see: U.S. Patent Application Serial Number 12/387,633 entitled "Method of Network Entry in OFDM Multi-Carrier Wireless Communications Systems", filed on May 4, 2009, by I-Kang Fu.

Similarly, for LTE-Advanced system, in a first stage of common camp on procedure for all devices, a user equipment (UE) selects one of its supported RF carriers as the primary carrier to perform network entry with a serving base station. In a second stage of extended network entry procedure for multi-carrier devices, the user equipment performs carrier configuration and carrier activation procedures with the serving base station, and is then ready for aggregated data transmission over multiple RF carriers. While the two-stage network entry procedure is applicable for both WiMAX and LTE-advanced wireless systems, the remaining embodiments/examples are made only with respect to WiMAX OFDM networks.

In one novel aspect, during the carrier assignment procedure, the mobile station and the serving base station exchange and negotiate carrier deployment and multi-carrier capability information, and make a well-informed carrier assignment decision based on the negotiation result. Furthermore, the carrier assignment decision may be updated based on additional considerations. Such updated assignment decision may be made by the base station in unsolicited manner, or based on a carrier re-assignment request from the mobile station.

In another novel aspect, during the carrier assignment procedure, the mobile station only informs the base station part of the carriers that it can simultaneously support. For example, the mobile station can simultaneously support four of the carriers deployed by the base station. The mobile station only informs base station one of them as its capability, so as to indirectly guide the base station only assign one carrier to the mobile station to reduce the disruption by monitoring the assigned carriers. Another example is that the mobile station does not inform any carriers as its multi-carrier capability at the beginning. Latter on the mobile further request carrier re-assignment to add more assigned carriers that it can supports.

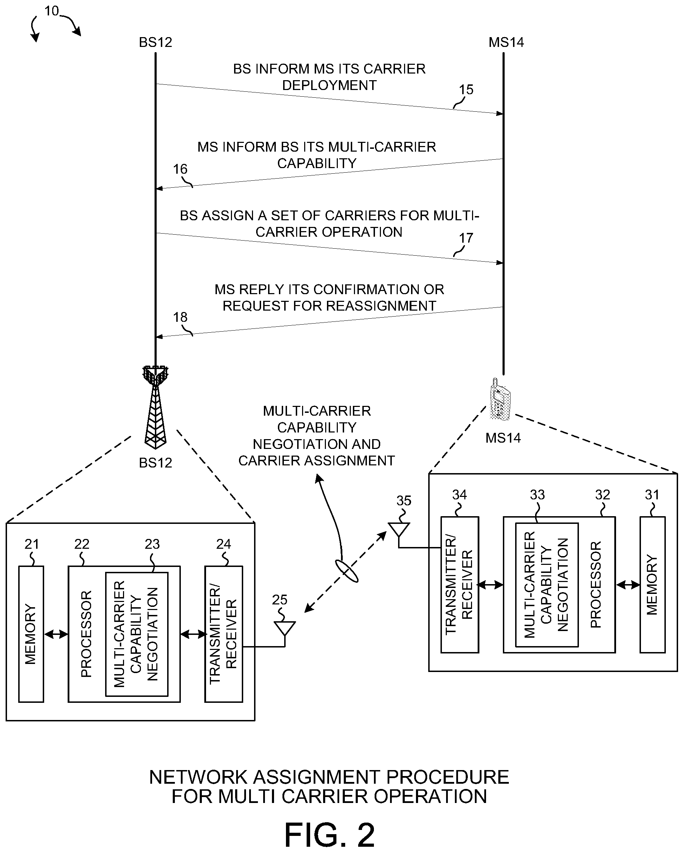

Figure 2 illustrates an operation flow of a carrier assignment procedure between a base station and a mobile station in multi-carrier OFDM network 10. Base station BS14 comprises memory 21, a processor 22, a multi-carrier capability negotiation module 23, and an RF transmitter and receiver 24 coupled to an antenna 25. Similarly, mobile station MS14 comprises memory 31, a processor 32, a multi-carrier capability negotiation module 33, and an RF transmitter and receiver 34 coupled to an antenna 35. In one example, the multi-carrier capability negotiation module is implemented within the processor. The multi-carrier capability negotiation module process multi-carrier capability negotiation related messages exchanged between BS12 and MS14 and in response makes carrier assignment decision based on the negotiation results as well as additional considerations such as link measurement results and traffic loading.

As illustrated in Figure 2, BS12 first informs MS14 its carrier deployment information (step 15). Carrier deployment information comprises physical information of a set of available RF carriers supported by BS12. The physical information includes bandwidth and center frequency of each available RF carriers. Based on the carrier deployment information, MS14 informs BS12 its multi-carrier capability information (step 16). Multi-carrier capability information comprises the RF carriers that can be simultaneously supported by MS 14. Next, BS12 assigns a set of secondary carriers to MS 14 for multi-carrier data transmission (step 17). The assigned secondary carriers are determined by BS12 based on the multi-carrier capability information of MS 14, as well as additional consideration such as channel quality measurement results and network traffic loading condition. Finally, MS 14 replies to confirm the assigned secondary carriers, or requests BS12 to re-assign an updated set of secondary carriers (step 18).

To make a well-informed carrier assignment decision, it is essential for the base station and the mobile station to be able to exchange and negotiate their corresponding carrier deployment and multi-carrier capability information completely and accurately. From the mobile station perspective, it needs to know which carriers are supported by its serving BS, and thereby determine a subset of carriers that the MS can simultaneously support to be used for carrier assignment. From the base station perspective, it needs to know which carriers can be simultaneously supported by the MS, and thereby assign a subset of secondary carriers for multi-carrier data transmission. Because of the complexity of a multi-carrier network environment, the above-illustrated carrier assignment procedure thus ensures that the assigned secondary carriers are not only supported by both the serving BS and the MS, but also desirable under additional requirements based on network condition. Various embodiments and examples of each step of the carrier assignment procedure are now described below with more details.

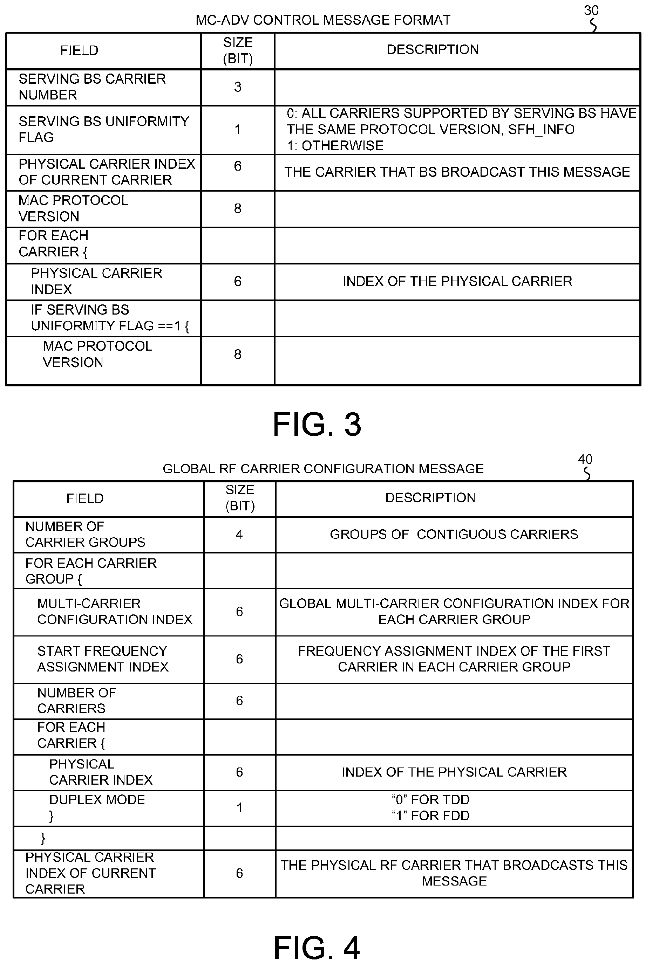

Figure 3 illustrates one embodiment of a multi-carrier advertisement (MC-ADV) message broadcasted by a serving base station to inform its carrier deployment information (step 15 of Figure 2). By periodically broadcasting the MC-ADV message, the serving BS informs its subordinate mobile stations with basic RF carrier configuration for all available carriers supported by the serving BS. In the example of Figure 3, the MC-ADV includes a serving BS carrier number, a serving BS uniformity flag (i.e., "0" means all carriers supported by the serving BS have the same protocol version and "1" means otherwise), a physical carrier index of current RF carrier that broadcasting this message, and a MAC protocol version. In addition, the MC-ADV message also includes a physical carrier index for each supported RF carrier. Each physical carrier index is associated with a specific carrier bandwidth and center frequency. If the serving BS uniformity flag is equal to "1", then a MAC protocol version for each supported RF carrier is also included in the MC-ADV message.

The physical carrier index used in the MC-ADV message is the same as the physical carrier index defined in a global carrier configuration (GLOBAL-CONFIG) message transmitted by a serving base station to a mobile station right after network entry completes. In IEEE 802.16m systems, the GLOBAL-CONFIG message is transmitted by the serving BS to the MS for indicating physical parameters of each carrier and the associated physical carrier index. Figure 4 illustrates one embodiment of a global carrier configuration (GLOBAL-CONFIG) message. For additional details on the global carrier configuration message, see: U.S. Patent Application Serial Number 12/660,441 entitled "Method and Apparatus for Communicating Carrier Configuration in Multi-Carrier OFDM Systems", filed February 26, 2010, by I-Kang Fu.

Once a mobile station receives the carrier deployment information from its serving base station via the MC-ADV message, the mobile station is then ready to communicate its multi-carrier capability information back to the serving BS to request for a list of assigned carriers (step 16 of Figure 2). For a multi-carrier MS, however, it is difficult to define a set of parameters that can describe its multi-carrier capability completely and accurately. This is because in addition to basic physical parameters such as carrier bandwidth and center frequency information of each RF carrier, there could be many different carrier aggregation combinations to be supported by the multi-carrier MS. Depending on different hardware implementations, the multi-carrier MS may be able to support various carrier aggregation scenarios with contiguous or non-contiguous RF carriers, as well as intra-band or inter-band RF carriers.

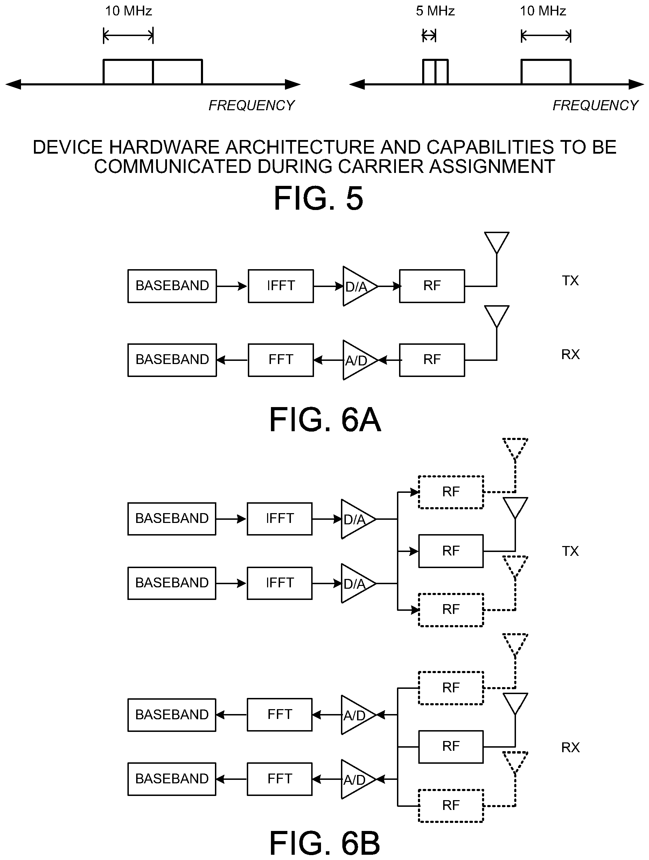

Figure 5 illustrates different scenarios of carrier aggregation of a mobile station device supporting an aggregated bandwidth of 20MHz. In a first example depicted in the left side of Figure 5, the mobile station supports two contiguous 10MHz RF carriers. This is referred to as contiguous and intra-band carrier aggregation. In a second example depicted on the right side of Figure 5, the mobile station supports two contiguous 5MHz RF carriers in one band class, and a single 10MHz RF carrier in another band class. This is referred to as non-contiguous and inter-band carrier aggregation. Different carrier aggregation scenarios result from different hardware implementations used by the mobile station.

Figure 6A illustrates a first hardware implementation of an RF transceiver to support multi-carrier capability of a mobile station. In this transceiver architecture, the mobile station utilizes single FFT and RF to transmit and receive radio signal waveforms across multiple RF carriers. This is done by utilizing the nature of OFDM signal and generating multiple waveforms by digital processing techniques. While this transceiver architecture has low hardware complexity, low cost, and low power consumption, it is less flexible in supporting non-contiguous RF carriers. It may be capable to support non-contiguous carriers within the same frequency band (intra-band scenario), but certainly cannot support carriers in different frequency bands (inter-band scenario) simultaneously.

Figure 6B illustrates a second hardware implementation of an RF transceiver to support multi-carrier capability of a mobile station. In this transceiver architecture, the mobile station utilizes multiple FFTs to generate OFDMA waveforms separately. In addition, the mobile station may also utilize different RF components (e.g., power amplifier, antenna) to transmit the OFDMA waveforms. This allows more flexibility in supporting various multi-carrier aggregation scenarios, either contiguous or non-contiguous, intra-band or inter-band. However, its hardware complexity, cost and power consumption are higher.

In general, different transceiver architectures are designed to achieve a desirable tradeoff between performance, complexity, and flexibility. In addition, the transceiver architectures illustrated in Figure 6A and 6B are complementary and may be integrated and combined under various scenarios. Thus, different mobile stations may support different carrier aggregation combinations depending on hardware implementation. Therefore, when a mobile station communicates its multi-carrier capability to its serving base station, it is essential to include such carrier aggregation information as well as physical parameters of each carrier.

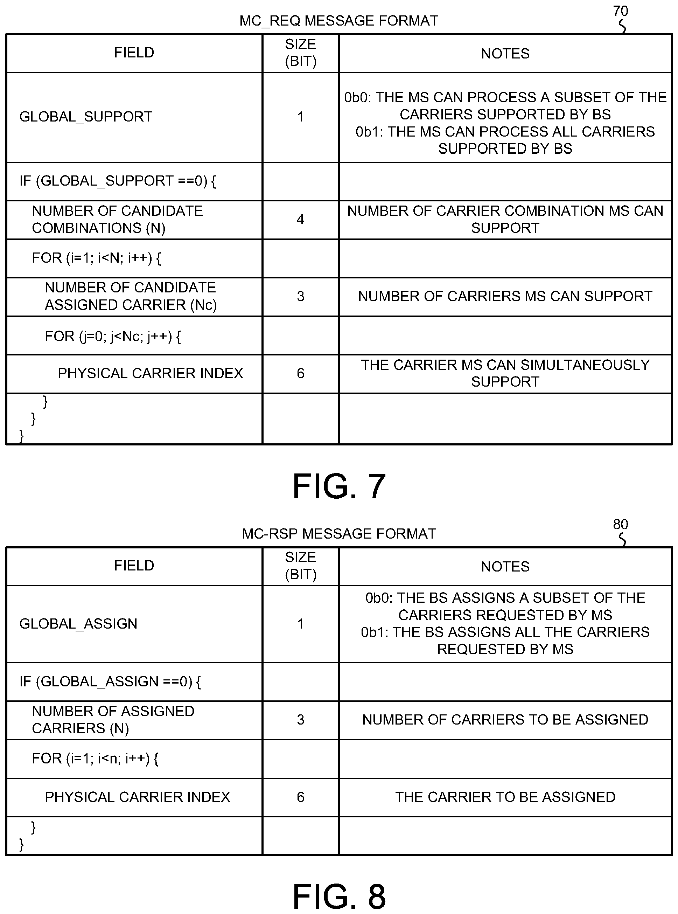

Figure 7 illustrates one embodiment of a multi-carrier request (MC-REQ) message sent by a mobile station to inform its multi-carrier capability information (step 16 of Figure 2). Based on the received MC-ADV message, the carriers included in the MC-REQ message belong to a subset of the available carriers supported by the BS. In the example of Figure 7, MC-REQ message includes a Global_Support bit that indicates whether the MS can process all the available carriers supported by the BS simultaneously (sometimes also referred to as a uniformity indicator). If Global_Support is equal to "0", then the MC-REQ message does not need to include other information related to its multi-carrier capability. On the other hand, if Global_Support is equal to "1", then the MC-REQ message includes a number of candidate combinations (N) indicating the number of carrier combinations the MS can support. For each candidate combination, the MC-REQ message further includes a number of candidate assigned carriers (Nc) indicating the number of carriers the MS can support within that candidate combination, and a physical carrier index for each carrier the MS can simultaneously support within that candidate combination.

Figure 8 illustrates one embodiment of a multi-carrier response (MC-RSP) message sent by a base station to assign secondary carriers for a mobile station (step 17 of Figure 2). Based on the received MC-REQ message, the assigned secondary carriers included in the MC-RSP message belong to a subset of the carriers that can be simultaneously supported by the MS. In the example of Figure 8, the MC-RSP message includes a Global_Assign bit that indicates whether the BS assigns all the carriers requested by the MS (sometimes also referred to as a uniformity indicator). If Global_Assign is equal to "1", then the MC-RSP message does not need to include other information related to the assigned carriers. On the other hand, if Global_Assign is equal to "0", then the MC-RSP message includes a number of assigned carriers (N) indicating the number of carriers to be assigned, and a physical carrier index for each carrier to be assigned. The MC-RSP message is typically sent by the BS in response to the MC-REQ message sent by the MS requesting for carrier assignment. However, the MC-RSP message may also be sent by the BS to update the list of assigned carriers in unsolicited manner. For example, the BS may re-assign a new set of secondary carriers based on changed network traffic loading condition.

After a mobile station receives carrier assignment information of the assigned secondary carriers, the MS may either reply a message to confirm the carrier assignment or send a carrier re-assignment request to its serving base station (step 18 of Figure 2). The carrier re-assignment request may be based on measurement results over the assigned carriers. In one example, the MS discovers that the received signal quality over an assigned carrier is lower than a threshold level. In another example, the received signal quality over a specific carrier is higher than a threshold level but the BS did not assign the specific carrier. The carrier re-assignment request may also be based on other specific conditions. For example, an MS having single RF hardware implementation may prefer to have contiguous assigned carriers instead of non-contiguous assigned carriers. Based on the measurement results or the specific conditions, the MS may make specific carrier assignment recommendation to the BS. In one embodiment, the MS may specifically recommend adding an additional set of carriers, or removing an existing set of assigned carrier, or both. In another embodiment, the MS may send updated multi-carrier capability information via another MC-REQ message. Once the BS receives the carrier re-assignment request, it makes updated carrier assignment decision and transmits the updated set of assigned carriers back to the MS.

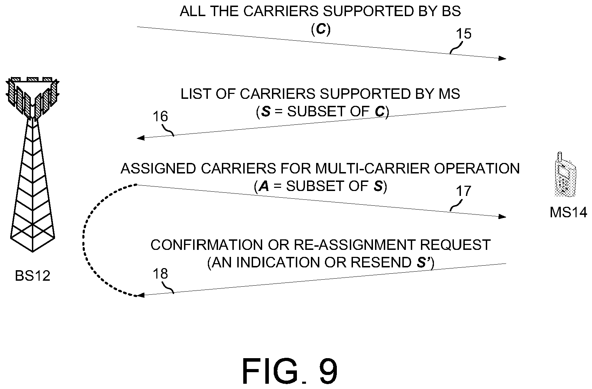

The information exchanged during the above-illustrated carrier assignment procedure can be more precisely expressed in mathematical form. Figure 9 illustrates mathematical notifications defining solution spaces of the carrier deployment, multi-carrier capability, carrier assignment and re-assignment information exchanged between BS12 and MS 14 of Figure 2. In step 15, BS12 informs MS 14 all the carriers C supported by BS12, where C represents a set of solutions (i.e., the physical carrier index). In step 16, MS14 informs BS12 a set of carriers S that can be simultaneously supported by MS 14, where S represents a set of solutions (i.e., the physical carrier index) and is a subset of C. MS14 may also inform multiple sets of carriers, and each set of carriers can be simultaneously supported by MS14. In step 17, BS12 informs MS14 a set of assigned carriers **A,** where **A** represents a set of solutions (i.e., the physical carrier index) and is a subset of **S.** Finally, in step 18, MS 14 may either confirm the assignment or send a re-assignment request. The re-assignment request may include an indication or another set of carriers **S'** that can be simultaneously supported by MS 14, where **S'** is also a subset of **C.** Based on the new set of carriers **S',** BS12 may adjust its carrier assignment decision and send an updated set of assigned carriers **A'** to MS 14. In one example, the physical carrier indexes have a bitmap format.

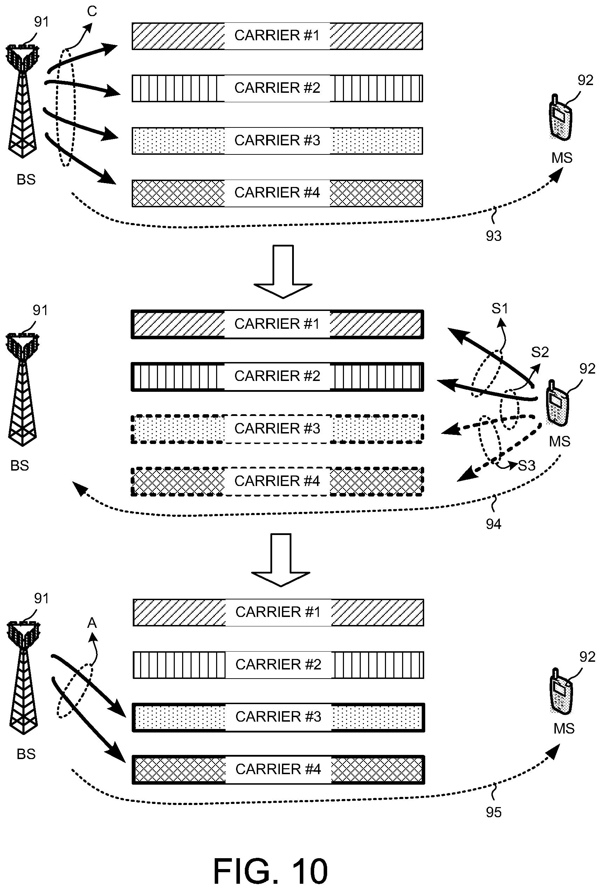

Figure 10 illustrates specific examples of a carrier assignment procedure between a base station BS91 and a mobile station MS92. First, through a MC-ADV message 93, BS91 informs MS92 that there are four available carriers #1-#4 supported by BS91 (i.e., **C** = {1, 2, 3, 4}). Next, through a MC-REQ message 94, MS92 informs BS91 that it can simultaneously support two contiguous carriers out of the four available carriers. The MC-REQ message may have different formats. In a first example, MS92 may reply multiple lists to BS91 (e.g., **S1** = {1,2}, **S2** = {2,3}, **S3** = {3,4}). In a second example, MS92 may reply part of the lists based on other consideration (e.g., **S1** = {1,2}, **S3** = {3,4}). In a third example, MS92 may reply only one list (e.g., **S1** = {1,2}) and include an "uniformity indicator" to represent that MS92 can also support other carrier combinations that are associated with the same carrier aggregation scenario. For instance, if carrier #1 and carrier #2 are 10MHz and 5MHz carriers respectively, then **"S1** = {1,2} + uniformity indicator" represents that MS92 can support the assigned carriers to be any carrier combinations which are also "a 10MHz carrier + a 5MHz carrier". Next, through a MC-RSP message 95, BS91 send MS92 the two contiguous assigned carriers (i.e., **A** = {3,4}) selected from **S1, S2** and **S3.** Finally, the assigned carriers may be updated by BS91 (i.e., re-transmit **A'** = {1,2}) in unsolicited manner. For example, BS91 re-assigns the carriers because the channel quality measurement result over carrier #4 is very poor. Alternatively, MS92 may send a re-assignment request to ask BS91 make a new assignment. In one example, MS92 may specifically request to add a new set of carriers (i.e., add **S1** = {1,2}) to be assigned, or to remove the already assigned carriers (i.e., remove **S3** = {3,4}). In another example, MS92 may transmit an updated MC-REQ message that contains updated carriers lists that can be simultaneously supported by MS92 (i.e., **S1** = {1,2}, **S2** = {2,3}) to BS91 such that **S3** = {3,4} will not be re-assigned by BS91.

Although the present invention has been described in connection with certain specific embodiments for instructional purposes, the present invention is not limited thereto. For example, in LTE-Advanced systems, carrier assignment operation is referred to as carrier configuration operation. While the terminology used is different, the basic concept and idea provided for carrier assignment operation in WiMAX systems is also applicable for carrier configuration operation in LTE-Advanced systems. If the enhanced node B (eNB) support multiple cells within the same carrier, it further comprises serving cell configuration operation. Accordingly, various modifications, adaptations, and combinations of various features of the described embodiments can be practiced without departing from the scope of the appended claims.

## Claims

1. A method, comprising:
transmitting (15), at a base station, carrier deployment information that comprises physical information of a set (C) of available carriers supported by the base station (12);
receiving (16), at the base station, multi-carrier capability information that comprises carriers that can be simultaneously supported by a mobile station (14), wherein the simultaneously supportable carriers are based at least in part on the carrier deployment information; determining, at the base station, a set of assigned carriers based at least in part on the multi-carrier capability information; and
transmitting (17) carrier assignment information that comprises the determined set of assigned carriers of the base station,
**characterized by**
the multi-carrier capability information comprising one or more sets (S1, S2, S3) forming subsets of set (C) of available carriers supported by the base station (12), wherein each of said one or more sets (S1, S2, S3) of carriers is simultaneously supported by the mobile station (14).

2. The method of Claim 1, wherein said set of assigned carriers is selected by the base station (12) from said one or more sets (S1, S2, S3) forming subsets of set (C).

3. The method of Claim 1 or 2, wherein the carrier deployment information comprises center frequency and bandwidth information of each available carrier.

4. The method of Claim 1 or 2, wherein the carrier deployment information comprises a set of carrier indexes, each index is uniquely associated with each available carrier.

5. The method of Claim 4, wherein the carrier indexes have a bitmap format.

6. The method of Claim 1 or 2, wherein the assigned carriers are determined by the base station (12) based on channel quality measurement results and traffic loading information of each assigned carrier.

7. The method of Claim 1 or 2, wherein the carrier assignment information comprises a uniformity indicator indicating all carriers that are simultaneously supported by the mobile station (14).

8. The method of Claim 1 or 2, further comprising:
updating carrier assignment information that comprises a new set of assigned carriers of the base station (12).

9. The method of Claim 1 or 2, further comprising:
updating carrier assignment information that comprises a new set of assigned carriers of the base station (12), wherein the new set of assigned carriers is determined by the base station (12) in response to a carrier re-assignment request from the mobile station (14).

10. The method of Claim 9, wherein the carrier-reassignment request comprises updated multi-carrier capability information comprising an updated set of carriers that can be simultaneously supported by the mobile station (14).

11. A method, comprising:
receiving (15), at a mobile station, carrier deployment information that comprises physical information of a set (C) of available carriers supported by a base station (12);
transmitting (16), at the mobile station, multi-carrier capability information that comprises carriers that can be simultaneously supported by the mobile station (14), wherein the simultaneously supportable carriers are based at least in part on the carrier deployment information; and
receiving (17), at the mobile station, carrier assignment information that comprises a set of assigned carriers of the base station (12), determined at the base station, wherein the assigned carriers are based at least in part on the multi-carrier capability information, **characterized by**
the multi-carrier capability information comprising one or more sets (S1, S2, S3) forming subsets of set (C) of available carriers supported by the base station (12), wherein each of said one or more sets (S1, S2, S3) of carriers is simultaneously supported by the mobile station (14).

12. The method of Claim 11, wherein said set of assigned carriers is selected by the base station (12) from said one or more sets (S1, S2, S3) forming subsets of set (C).

13. The method of Claim 11 or 12, wherein the simultaneously supportable carriers are determined based on channel quality measurement results over the carriers by the mobile station (14).

14. The method of Claim 11 or 12, wherein the simultaneously supportable carriers are indicated by one or more sets of carrier indexes.

15. The method of Claim 14, wherein the one or more sets of carrier indexes are updated by the mobile station (14) by transmitting one or more updated sets of carrier indexes to the base station (12).

16. The method of Claim 14, wherein the carrier indexes have a bitmap format.

17. The method of Claim 11 or 12, further comprising:
receiving an updated carrier assignment information that comprises a new set of assigned carriers of the base station (12).

18. The method of Claim 11 or 12, further comprising:
transmitting (18) a carrier-reassignment request; and
receiving an updated carrier assignment information that comprises a new set of assigned carriers determined by the base station (12) in response to the carrier re-assignment request.

19. The method of Claim 18, wherein the carrier re-assignment request comprises updated multi-carrier capability information that comprises updated carriers that can be simultaneously supported by the mobile station (14).

20. The method of Claim 18, wherein the carrier re-assignment request comprises information on either adding a preferred set of carriers or removing a non-preferred set of carriers for carrier re-assignment.

21. The method of Claim 10, wherein the multi-carrier capability information comprising a uniformity indicator that indicates all available carriers of the base station (12).

22. The method of Claim 10, wherein the multi-carrier capability information comprises a first set of simultaneously supported carriers and a uniformity indicator that indicates all combinations associated with the first set of simultaneously supported carriers.

23. A base station (12), comprising:
a radio frequency, RF, transceiver (24) adapted to transmit carrier deployment information and adapted to receive in response multi-carrier capability information from a mobile station (14), wherein the carrier deployment information comprises a set (C) of available carriers supported by the base station (12), wherein the multi-carrier capability information comprises carriers that can be simultaneously supported by the mobile station (14), wherein the simultaneously supportable carriers are based at least in part on the carrier deployment information;
a multi-carrier capability negotiation module (23) adapted to determine a set of assigned carriers based at least in part on the multi-carrier capability information; and
the radio frequency, RF, transceiver (24) adapted to transmit carrier assignment information that comprises the determined set of assigned carriers of the base station (12),
**characterized by**
the multi-carrier capability information comprising one or more sets (S1, S2, S3) forming subsets of set (C) of available carriers supported by the base station (12), wherein each of said one or more sets (S1, S2, S3) of carriers is simultaneously supported by the mobile station (14).

24. The base station of Claim 23, wherein said set of assigned carriers is selectable by the base station (12) from said one or more sets (S1, S2, S3) forming subsets of set (C).

25. The base station (12) of Claim 23 or 24, wherein the assigned carriers are updatable by the base station (12).

26. The base station (12) of Claim 23 or 24, wherein the assigned carriers are updatable by the base station (12) in response to a carrier re-assignment request from the mobile station (14).

## Patentansprüche

1. Verfahren aufweisend:
Übertragen (15), an einer Basisstation, einer Träger-Bereitstellungsinformation, die eine physikalische Information in Bezug auf einen Satz (C) von verfügbaren Trägern aufweist, die durch die Basisstation (12) unterstützt werden;
Empfangen (16), an der Basisstation, einer Mehrträger-Fähigkeitsinformation, die Träger aufweist, die simultan durch eine Mobilstation (14) unterstützt werden können, wobei die simultan unterstützten Träger zumindest teilweise auf der Träger-Bereitstellungsinformation basieren;
Bestimmen, an der Basisstation, eines Satzes von zugeordneten Trägern zumindest teilweise auf Basis der Mehrträger-Fähigkeitsinformation; und
Übertragen (17) einer Träger-Zuordnungsinformation, die den bestimmten Satz von zugeordneten Trägern der Basisstation aufweist,
**dadurch gekennzeichnet, dass**
die Mehrträger-Fähigkeitsinformation einen oder mehrere Sätze (S1,S2,S3) aufweist, die Teilsätze des Satzes (C) der verfügbaren Träger ausbilden, die von der Basisstation (12) unterstützt werden,
wobei jeder der einen oder mehreren Sätze (S1,S2,S3) der Träger durch die Mobilstation (14) simultan unterstützt wird.

2. Verfahren nach Anspruch 1, bei dem der Satz der zugeordneten Träger durch die Basisstation (12) aus einem oder mehreren Sätzen (S1,S2,S3) ausgewählt wird, die Teilsätze des Satzes (C) bilden.

3. Verfahren nach Anspruch 1 oder 2, bei dem die Träger-Bereitstellungsinformation eine Mittenfrequenz- und Bandbreiteninformation eines jeden zugeordneten Trägers aufweist.

4. Verfahren nach Anspruch 1 oder 2, bei dem die Träger-Bereitstellungsinformation einen Satz von Trägerindices aufweist, wobei jeder Index speziell mit jedem verfügbaren Träger verknüpft ist.

5. Verfahren nach Anspruch 4, bei dem die Trägerindices ein Bitmap-Format aufweisen.

6. Verfahren nach Anspruch 1 oder 2, bei dem die zugeordneten Träger durch die Basisstation (12) auf Basis von Kanalqualitätsmessergebnissen und Datenladeinformation eines jeden zugeordneten Trägers bestimmt werden.

7. Verfahren nach Anspruch 1 oder 2 bei dem die Träger-Zuordnungsinformation einen Einheitlichkeits-Indikator aufweist, der alle Träger angibt, die simultan von der Mobilstation (14) unterstützt werden.

8. Verfahren nach Anspruch 1 oder 2, weiter aufweisend:
Aktualisieren der Träger-Zuordnungsinformation, die einen neuen Satz von zugordneten Trägern der Basisstation (12) aufweist.

9. Verfahren nach Anspruch 1 oder 2, weiter aufweisend:
Aktualisieren der Träger-Zuordnungsinformation, die einen neuen Satz von zugordneten Trägern der Basisstation (12) aufweist, wobei der neue Satz der zugeordneten Träger durch die Basisstation (12) in Antwort eines Träger-Neuzuordnungsbefehls von der Mobilstation (14) bestimmt wird.

10. Verfahren nach Anspruch 9, bei dem der Träger-Neuzuordnungsbefehl eine aktualisierte Mehrträger-Fähigkeitsinformation aufweist, die einen aktualisierten Satz von Trägern aufweist, die simultan durch die Mobilstation (14) unterstützt werden können.

11. Verfahren aufweisend:
Empfangen (15), an einer Basisstation, einer Träger-Bereitstellungsinformation, die eine physikalische Information in Bezug auf einen Satz (C) von verfügbaren Trägern aufweist, die durch die Basisstation (12) unterstützt werden;
Übertragen (16), an der Mobilstation, einer Mehrträger-Fähigkeitsinformation, die Träger aufweist, die simultan durch die Mobilstation (14) unterstützt werden können, wobei die simultan unterstützten Träger zumindest teilweise auf der Träger-Bereitstellungsinformation basieren; und
Empfangen (17), an der Mobilstation, einer Träger-Zuordnungsinformation, die einen Satz von zugeordneten Trägern der Basisstation (12) aufweist, die an der Basisstation bestimmt werden,
wobei die zugordneten Träger zumindest teilweise auf der Mehrträger-Fähigkeitsinformation basieren, **dadurch gekennzeichnet, dass**
die Mehrträger-Fähigkeitsinformation einen oder mehrere Sätze (S1,S2,S3) aufweist, die Teilsätze des Satzes (C) der verfügbaren Träger ausbilden, die von der Basisstation (12) unterstützt werden,
wobei jeder der einen oder mehreren Sätze (S1,S2,S3) der Träger durch die Mobilstation (14) simultan unterstützt wird.

12. Verfahren nach Anspruch 11, bei dem der Satz der zugeordneten Träger durch die Basisstation (12) aus einem oder mehreren Sätzen (S1,S2,S3) ausgewählt wird, die Teilsätze des Satzes (C) bilden.

13. Verfahren nach Anspruch 11 oder 12, bei dem die simultan unterstützten Träger auf Basis von Kanalqualitätsmessergebnissen über Träger durch die Mobilstation (14) bestimmt werden.

14. Verfahren nach Anspruch 11 oder 12, bei dem die simultan unterstützten Träger durch einen oder mehrere Sätze von Trägerindices indiziert werden.

15. Verfahren nach Anspruch 14, bei dem der eine oder die mehreren Sätze von Trägerindices durch die Mobilstation (14) aktualisiert werden, indem einer oder mehrere aktualisierte Sätze von Trägerindices zu der Basisstation (12) übertragen werden.

16. Verfahren nach Anspruch 14, bei dem die Trägerindices ein Bitmap-Format aufweisen.

17. Verfahren nach Anspruch 11 oder 12, weiter aufweisend:
Empfangen einer aktualisierten Träger-Zuordnungsinformation, die einen neuen Satz von zugordneten Trägern der Basisstation (12) aufweist.

18. Verfahren nach Anspruch 11 oder 12, weiter aufweisend:
Übertragen (18) eines Träger-Neuzuordnungsbefehls; und
Empfangen einer aktualisierten Träger-Zuordnungsinformation, die einen neuen Satz von zugordneten Trägern aufweist, die durch die Basisstation (12) in Antwort auf den Träger-Neuzuordnungsbefehl bestimmt werden.

19. Verfahren nach Anspruch 18, bei dem der Träger-Neuzuordnungsbefehl eine aktualisierte Mehrträger-Fähigkeitsinformation aufweist, die aktualisierte Träger aufweist, die simultan durch die Mobilstation (14) unterstützt werden können.

20. Verfahren nach Anspruch 18, bei dem der Träger-Neuzuordnungsbefehl eine Information entweder in Bezug auf das Hinzufügen eines bevorzugten Satzes von Trägern oder in Bezug auf das Entfernen eines nichtbevorzugten Satzes von Trägern zum Zweck der Träger-Neuzuordnung aufweist.

21. Verfahren nach Anspruch 10, bei dem die Mehrträger-Fähigkeitsinformation einen Einheitlichkeits-Indikator aufweist, der alle verfügbaren Träger der Basisstation (12) angibt.

22. Verfahren nach Anspruch 10, bei dem die Mehrträger-Fähigkeitsinformation einen ersten Satz von simultan unterstützten Trägern und einen Einheitlichkeits-Indikator aufweist, der alle Kombinationen angibt, die mit dem ersten Satz von simultan unterstützten Trägern verknüpft sind.

23. Basisstation (12) aufweisend:
einen Radiofrequenz, RF, -Transceiver (24), der ausgestaltet ist, eine Träger-Bereitstellungsinformation zu übertragen, und der ausgestaltet ist, in Antwort darauf eine Mehrträger-Fähigkeitsinformation von einer Mobilstation (14) zu empfangen, wobei die Träger-Bereitstellungsinformation einen Satz (C) von verfügbaren Trägern aufweist, die durch die Basisstation (12) unterstützt werden,
wobei die Mehrträger-Fähigkeitsinformation Träger aufweist, die simultan durch eine Mobilstation (14) unterstützt werden können,
wobei die simultan unterstützten Träger zumindest teilweise auf der Träger-Bereitstellungsinformation basieren;
ein Mehrträger-Fähigkeitsverhandlungs-Modul (23), das ausgestaltet ist, einen Satz von zugeordneten Trägern zumindest teilweise auf Basis der Mehrträger-Fähigkeitsinformation zu bestimmen, und
wobei das Radiofrequenz, RF, -Transceiver (24) ausgestaltet ist, eine Träger-Zuordnungsinformation zu übertragen, die einen bestimmten Satz von zugeordneten Trägern der Basisstation (12) aufweist, **dadurch gekennzeichnet, dass**
die Mehrträger-Fähigkeitsinformation einen oder mehrere Sätze (S1,S2,S3) aufweist, die Teilsätze des Satzes (C) der verfügbaren Träger ausbilden, die von der Basisstation (12) unterstützt werden,
wobei jeder der einen oder mehreren Sätze (S1,S2,S3) der Träger durch die Mobilstation (14) simultan unterstützt wird.

24. Basisstation nach Anspruch 23, bei der der Satz der zugeordneten Träger durch die Basisstation (12) aus einem oder mehreren Sätzen (S1,S2,S3) auswählbar ist, die Teilsätze des Satzes (C) bilden.

25. Basisstation (12) nach Anspruch 23 oder 24, bei der die zugeordneten Träger durch die Basisstation (12) aktualisierbar sind.

26. Basisstation (12) nach Anspruch 23 oder 24, bei der die zugeordneten Träger durch die Basisstation (12) in Antwort auf einen Träger-Neuzuordnungsbefehl von der Mobilstation (14) aktualisierbar sind.

## Revendications

1. Procédé comprenant les étapes consistant à :
transmettre (15), au niveau d'une station de base, des informations de déploiement de porteuse qui comprennent des informations physiques d'un ensemble (C) de porteuses disponibles supportées par la station de base (12) ;
recevoir (16), au niveau de la station de base, des informations de capacité multi porteuse qui comprennent des porteuses pouvant être simultanément supportées par une station mobile (14) dans laquelle les porteuses supportables simultanément sont basées au moins en partie sur les informations de déploiement de porteuse ;
déterminer, au niveau de la station de base, un ensemble de porteuses assignées basées au moins en partie sur les informations de capacité multi-porteuse et
transmettre (17) des informations d'assignation de porteuse qui comprennent l'ensemble déterminé de porteuses assignées de la station de base,
**caractérisé par le fait que** les informations de capacité multi-porteuse comprennent un ou plusieurs ensembles (S1, S2, S3) formant des sous-ensembles de l'ensemble (C) de porteuses disponibles supportées par la station de base (12), dans lequel chacun desdits un ou plusieurs ensembles (S1, S2, S3) de porteuses est simultanément supporté par la station mobile (14).

2. Procédé selon la revendication 1, dans lequel ledit ensemble de porteuses assignées est sélectionné par la station de base (12) à partir d'un ou de plusieurs ensembles (S1, S2, S3) formant des sous-ensembles de l'ensemble (C).

3. Procédé selon la revendication 1 ou la revendication 2, dans lequel les informations de déploiement de porteuse comprennent les informations de fréquence centrale et de bande passante de chaque porteuse disponible.

4. Procédé selon la revendication 1 ou la revendication 2, dans laquelle les informations de déploiement de porteuse comprennent un ensemble d'indices de porteuse, chaque indice étant associé de façon unique à chaque porteuse disponible.

5. Procédé selon la revendication 4, dans lequel les indices de porteuse ont un format bitmap.

6. Procédé selon la revendication 1 ou la revendication 2, dans lequel les porteuses assignées sont déterminées par la station de base (12) sur la base des résultats de mesure de la qualité de canal et d'informations d'intensité de trafic de chaque porteuse assignée.

7. Procédé selon la revendication 1 ou la revendication 2, dans lequel les informations d'assignation de porteuse comprennent un indicateur d'uniformité indiquant toutes les porteuses qui sont simultanément supportées par la station mobile (14).

8. Procédé selon la revendication 1 ou la revendication 2, comprenant en outre :
l'actualisation d'informations d'assignation de porteuse qui comprennent un nouvel ensemble de porteuses assignées de la station de base (12).

9. Procédé selon la revendication 1 ou la revendication 2, comprenant en outre :
l'actualisation des informations d'assignation de porteuse qui comprennent un nouvel ensemble de porteuses assignées de la station de base (12), dans lequel le nouvel ensemble de porteuses assignées est déterminé par la station de base (12) en réponse à une requête de réassignation de porteuses venant de la station mobile (14).

10. Procédé selon la revendication 9, dans lequel la requête de réassignation de porteuse comprend des informations de capacité multi-porteuse comprenant un ensemble actualisé de porteuses qui peuvent être simultanément supportées par la station mobile (14).

11. Procédé comprenant les étapes consistant à :
recevoir (15), au niveau d'une station mobile, des informations de déploiement de porteuse qui comprennent des informations physiques d'un ensemble (C) de porteuses disponibles supportées par une station de base (12) ;
transmettre (16), au niveau de la station mobile, des informations de capacité multi-porteuse qui comprennent des porteuses qui peuvent être simultanément supportées par la station mobile (14),
dans laquelle les porteuses simultanément supportables sont basées au moins en partie sur les informations de déploiement de porteuse et
recevoir (17), au niveau de la station mobile, des informations d'assignation de porteuse qui comprennent un ensemble de porteuses assignées de la station de base (12), déterminées au niveau de la station de base, dans laquelle les porteuses assignées sont basées au moins en partie sur les informations de capacité multi porteuse,
**caractérisé par le fait que** les informations de capacité multi-porteuse comprennent un ou plusieurs ensembles (S1, S2, S3) formant des sous-ensembles de l'ensemble (C) des porteuses disponibles supportées par la station de base (12), dans lequel chacun desdits un ou plusieurs ensembles (S1, S2, S3) de porteuses est simultanément supporté par la station mobile (14).

12. Procédé selon la revendication 11, dans lequel ledit ensemble de porteuses assignées est sélectionné par la station de base (12) à partir d'un ou de plusieurs ensembles (S1, S2, S3) formant des sous-ensembles de l'ensemble (C).

13. Procédé selon la revendication 11 ou la revendication 12, dans lequel les porteuses simultanément supportables sont déterminées sur la base des résultats de mesure de la qualité de canal sur les porteuses par la station mobile (14).

14. Procédé selon la revendication 11 ou la revendication 12, dans lequel les porteuses simultanément supportables sont indiquées par un ou plusieurs ensembles d'indices de porteuse.

15. Procédé selon la revendication 14 dans lequel un ou plusieurs ensembles d'indices de porteuse sont actualisés par la station mobile (14) en transmettant un ou plusieurs ensembles actualisés d'indices de porteuse à la station de base (12).

16. Procédé selon la revendication 14 dans lequel les indices de porteuse ont un format bitmap.

17. Procédé selon la revendication 11 ou la revendication 12, comprenant en outre la réception d'une information d'assignation de porteuse actualisée qui comprend un nouvel ensemble de porteuses assignées de la station de base (12).

18. Procédé selon la revendication 11 ou la revendication 12, comprenant en outre :
la transmission (18) d'une requête de réassignation de porteuse et
la réception d'une information d'assignation de porteuse actualisée qui comprend un nouvel ensemble de porteuses assignées déterminées par la station de base (12) en réponse à la requête de réassignation de porteuse.

19. Procédé selon la revendication 18, dans lequel la requête de réassignation de porteuse comprend des informations de capacité multi-porteuse actualisées qui comprennent les porteuses actualisées qui peuvent être simultanément supportées par la station mobile (14).

20. Procédé selon la revendication 18, dans lequel la requête de réassignation de porteuse comprend des informations soit sur l'ajout d'un ensemble préféré de porteuses soit sur la suppression d'un ensemble non préféré de porteuses pour la réassignation de porteuse.

21. Procédé selon la revendication 10, dans lequel les informations de capacité multi-porteuse comprennent un indicateur d'uniformité qui indique toutes les porteuses disponibles de la station de base (12).

22. Procédé selon la revendication 10, dans lequel les informations de capacité multi-porteuse comprennent un premier ensemble de porteuses simultanément supportées et un indicateur d'uniformité qui indique toutes les combinaisons associées au premier ensemble de porteuses simultanément supportées.

23. Station de base (12), comprenant :
un émetteur-récepteur (24) de fréquence radio, RF, adapté pour transmettre des informations de déploiement de porteuse et adapté pour recevoir en réponse des informations de capacité multi-porteuse d'une station mobile (14), dans laquelle les informations de déploiement de porteuse comprennent un ensemble (C) de porteuses disponibles supportées par la station de base (12), dans laquelle les informations de capacité multi-porteuse comprennent les porteuses qui peuvent être simultanément supportées par la station mobile (14), dans lequel les porteuses simultanément supportables sont basées au moins sur les informations de déploiement de porteuse ;
un module de négociation de capacité multi-porteuse (23) adapté pour déterminer un ensemble de porteuses assignées basées au moins en partie sur les informations de capacité multi-porteuse et l'émetteur-récepteur de fréquence radio (24) adapté pour transmettre des informations d'assignation de porteuse qui comprennent l'ensemble déterminé de porteuses assignées de la station de base (12), **caractérisé par le fait que** les informations de capacité multi-porteuse comprennent un ou plusieurs ensembles (S1, S2, S3) formant des sous-ensembles de l'ensemble (C) de porteuses disponibles supportées par la station de base (12), dans lequel chacun des un ou plusieurs ensembles (S1, S2, S3) de porteuses est simultanément supporté par la station mobile (14).

24. Station de base selon la revendication 23, dans laquelle ledit ensemble de porteuses assignées est sélectionnable par la station de base (12) à partir desdits un ou plusieurs ensembles (S1, S2, S3) formant des sous-ensembles de l'ensemble (C).

25. Station de base (12) selon la revendication 23 ou la revendication 24, dans laquelle les porteuses assignées sont actualisables par la station de base (12).

26. Station de base (12) selon la revendication 23 ou la revendication 24, dans laquelle les porteuses assignées sont actualisables par la station de base (12) en réponse à une requête de réassignation de porteuse de la station mobile (14).
